# EUROPÄISCHE PATENTSCHRIFT

(11) **EP 1 479 514 B1**
(45) Veröffentlichungstag und Bekanntmachung des Hinweises auf die Patenterteilung: **07.12.2005**
(21) Anmeldenummer: 04010620.5
(22) Anmeldetag: 05.05.2004
(51) Int. Cl.: B32B 27/28, B65D 65/40, C08J 7/16

(54) **Lack- und Extrusions-Beschichtungsmaterial**
Material for application by lacquering or extrusion
Matériau de revêtement obtenu soit par peinture soit par extrusion

(30) Priorität: 10.05.2003 DE 10321074
(43) Veröffentlichungstag der Anmeldung: 24.11.2004
(73) Patentinhaber: Alcan Technology & Management AG, 8212 Neuhausen am Rheinfall (CH)
(72) Erfinder: Koblischek, Alfred, Dr., 77966 Kappeln (DE); Brandsch, Rainer, Dr., 82205 Gilching (DE)
(74) Vertreter: Minderop, Ralph H.

(56) Entgegenhaltungen:
- EP-A- 0 589 385
- DE-A- 19 503 326
- DE-A- 19 704 275

## Beschreibung

Die Erfindung betrifft ein flexibles Verpackungsmaterial mit einem Träger und mindestens einer thermoplastischen Polymerschicht mit Siegeleigenschaft und das zur Herstellung des Materials verwendete Beschichtungsmittel sowie die Verwendung eines Polymergemischs zur Herstellung eines Verpackungsmaterials.

Flexible Verpackungsmaterialien mit Siegeleigenschaft sind aus der Verpackungsindustrie nicht mehr weg zu denken. Sie werden insbesondere als Deckelmaterial zur Verpackung von Lebensmitteln, insbesondere Molkereiprodukte, eingesetzt, um Behältnisse dicht zu versiegeln. Vor allem im Molkereibereich sind die zu versiegelnden Behältnisse entweder aus Polystyrol oder aus Polypropylen hergestellt. Andere Materialien wie Polyethylen, Polyethylen beschichteter Karton, Polyester oder auch Polyvinylclorid sind möglich. Die zum Verschluss der Behältnisse verwendeten Deckelmaterialien sind häufig Aluminiumdeckel, mit Polymeren beschichteter Karton oder Papier oder aber Polyester, Polypropylen und verschiedenen Verbundmaterialien. Das als Deckel zum Einsatz kommende Substrat liegt in Form einer Folie vor, wird beschichtet, gegebenenfalls geprägt, bedruckt und ausgestanzt.

Zur Beschichtung der Aluminiumfolie kann ein Lack verwendet werden, in dem ein Polymer in Form eine Lösung oder Dispersion vorliegt.

Die Beschichtung von Substraten durch Extrusion ist prinzipiell zur Erzeugung einer Heißsiegelschicht ebenfalls geeignet. Jedoch weisen extrudierte Schichten im Vergleich zu Beschichtungen aus Lösung oder Dispersion eine höhere Schichtdicke von 20 bis 30 µm auf. Darüber hinaus unterscheiden sich die in Form eines Lack aufzutragenden und die durch Extrusion aufzutragenden Materialien erheblich. Dies bedingt unterschiedliche Eigenschaften der Polymerschichten und hat zur Folge, dass ein für die Lackierung bestimmtes Material nicht alternativ zur Beschichtung mittels Extrusion verwendet werden kann.

Die DE 197 04 275 A1 betrifft eine mehrschichtige transparente Folie zur Lebensmittelverpackung. Das eingesetzte Polymergemisch enthält ein kautschukelastisches Styrol/Butadien-Blockcopolymerisat und ein normalerweise harte bis spröde Massen bildendes weiteres Polymerisat als Mischungspartner. Die Glasübergangstemperaturen betragen mehr als 85% einerseits und mehr als 110°C andererseits.

Die DE 42 31 395 A1 offenbart heißsiegelfähige Kunststoff-Folien zum dichtenden Verschließen von Kunststoffbehältern und offenbart zu diesem Zweck Block- und Propfpolymerisate mit einer Glasübergangstemperatur von - 10°C.

Der Erfindung liegt damit die Aufgabe zugrunde, ein heißsiegelfähiges Beschichtungsmaterial für Verpackungszwecke bereitzustellen, das sowohl mittels Lacktechnologie als auch Extrusion auf Substrate oder Deckfolien aufgebracht werden kann und gegenüber gängigen Massenkunststoffen vergleichbare Siegeleigenschaften aufweist.

Gelöst wird diese Aufgabe durch ein Beschichtungsmaterial, enthaltend ein Block- oder Pfropfcopolymer, das Hartsegmente einer Glasübergangstemperatur (Tg) von 30 bis 200 °C und Weichsegmente einer Tg von -80 bis 20 °C enthält (Komponente A) und ein polare Gruppen aufweisendes Polymer (Komponente B), wobei der Volumenanteil der Hart-und Weichsegmente der Polymere der thermoplastischen Polymerschicht 3:1 bis 1:3 beträgt. Das Beschichtungsmaterial kann sowohl als Lack als auch durch Extrusion auf ein Substrat (Träger) aufgebracht werden. Dabei tritt keine Makrophasenseparation auf.

Gegenstand der Erfindung ist ferner ein flexibles Verpackungsmaterial mit einem Substrat und einer auf dem Substrat ausgebildeten Polymerschicht, wobei die Polymerschicht ein polare Gruppen enthaltendes Polymer und ein Block- oder Pfropfcopolymer enthält und das Copolymer Hartsegmente einer Glasübergangstemperatur (Tg) von 30 bis 200 °C und Weichsegmente einer Tg von -80 bis 20 °C aufweist und der Volumenanteil der Hart- und Weichsegmente der Polymere der thermoplastischen Polymerschicht 3:1 bis 1:3 beträgt.

Das erfindungsgemäße Beschichtungsmaterial erlaubt es dem Anwender mit ein und demselben Basismaterial Beschichtungen durch Extrusion oder aber durch Lackauftrag vorzunehmen, ohne dass zusätzliche Vorkehrungen getroffen werden müssen, um die gewünschte Siegelnahtfestigkeit der thermoplastischen Schicht auf den unterschiedlichen zur Verpackung eingesetzten weiteren Behältnissen zu erreichen. Das erfindungsgemäße Beschichtungsmaterial ist frei von Polyvinylchlorid und enthält weder Bisphenol-A noch dessen Derivate.

Die erfindungsgemäße Beschichtung siegelt sowohl gegen Polypropylen als auch gegen Polystyrol peelbar mit den gleichen Easypeel-Eigenschaften, d.h. der Deckel läßt sich zwar dicht und sicher verschließen, läßt sich andererseits aber auch unter geringem Kraftaufwand von Hand von dem Behältnis abziehen. Die dazu erforderliche Kraft ist im wesentlichen dieselbe unabhängig davon, ob das Verpackungsbehältnis ein Polystyrolbecher oder ein Polypropylenbecher ist. Es wird als überraschend angesehen, dass die Polymerschicht gegen so unterschiedliche Polymeren wie Polypropylen und Polystyrol die gleiche Siegelnahtfestigkeit aufweist.

Die erfindungsgemäße thermoplastische Beschichtung enthält ein mikrophasensepariertes Copolymer mit Hart- und Weichsegmenten (Komponente A). Das Copolymer (A) kann ein Block- oder Pfropfcopolymer sein. Es kann eine Di-, Tri oder Multiblockstruktur aufweisen; es kann linear, verzweigt oder sternförmig sein. Das mittlere Molekulargewicht (Mw) der die Hartphase bildenden Polymere kann 1.000 bis 100.000 g/mol, vorzugsweise 10.000 bis 30.000 g/mol, betragen. Das mittlere Molekulargewicht (Mw) der die Weichphase bildenden Polymere kann 10.000 bis 300.000 g/mol, vorzugsweise 30.000 bis 100.000 g/mol, betragen.

Die Glasübergangstemperatur (Tg) der Hartsegmente beträgt 30 bis 200 °C, vorzugsweise 40 bis 120 °C. Die Glasübergangstemperatur (Tg) der Weichsegmente beträgt -80 bis 20 °C, vorzugsweise -65 bis 5 °C. Der Anteil des Copolymers (A) beträgt vorzugsweise 50 bis 95 Gew.%, bezogen auf die Masse des Polymergemischs der thermoplastischen Schicht.

Typische Hartsegmente sind Polymerblöcke aus beispielsweise den Monomeren Styrol, alpha-Methylstyrol, Methylmethacrylat, Butylmethacrylat, Methacrylat und Acrylat, Caprolactam, Lactam, Dicarbonsäuren und Diamine, Dicarbonsäuren und Diole, Lactone und Milchsäure.

Typische Weichsegmente sind Polymerblöcke aus beispielsweise den Monomeren Butadien, Isopren, Styrol, Ethylen, Propylen, Buten, Hexen, Okten, Ethylenoxid und Propylenoxid.

Unter einem mikrophasenseparierten Block- oder Pfopfcopolymer wird erfindungsgemäß ein Makromolekül verstanden, dessen einzelne unterschiedliche Blöcke nicht mischbar sind und als getrennte Phasen räumlich eng nebeneinander vorliegen. Makroskopisch liegt dabei jedoch keine Phasentrennung vor.

Das polare Gruppen enthaltende Polymer (B) (polares Polymer) kann als Comonomere oder Pfropfmonomere beispielsweise Säureanhydride, Acrylsäure, Methacrylsäure, Vinylacetat, Acrylester und Methacrylester enthalten. Das polare Gruppen aufweisende Polymer (B) kann ein Polymer, Copolymer oder Pfopfcopolymer sein, das verträglich ist mit der Weichphase oder der Hartphase des Copolymers (A) oder kann selbst ein Block. Oder Pfropfcopolymer mit Hart-und Weichsegmenten sein, dessen Weichphase polare Gruppen trägt und dessen Hartphase verträglich ist mit der Hartphase von Copolymer (A).

Verträglich im Sinne der Erfindung bedeutet, dass in der thermoplastischen Polymerschicht keine sichtbare Makrophasenseparation der darin enthaltenen Polymere auftritt. Es liegt somit eine dauerhaft homogene Mischung der Polymere vor.

Die erfindungsgemäß eingesetzte thermoplastische Beschichtung kann ein weiteres Polymer (C) enthalten, welches mit der Hartphase oder der Weichphase von Copolymer (A) verträglich ist. Der Zusatz dieses Polymers ist insbesondere dann erforderlich, wenn der Volumenanteil von Hart- und Weichphase, bezogen auf den Gesamtpolymergehalt der thermoplastischen Schicht nicht dem zuvor angegebenen Verhältnis entspricht. Komponente (C) muß mit der im Unterschuß vorliegenden Phase verträglich sein. Die Tg der Komponente (C) entspricht derjenigen Phase, die im Unterschuß vorliegt. Das mittlere Molekulargewicht (Mw) kann 1.000 bis 100.000, vorzugsweise 2.000 bis 50.000, betragen.

Die thermoplastische Schicht kann weitere Zusätze enthalten wie Füllstoffe, auch organisch modifiziert, Teflon-, Polyethylen-, Polyolefin-, EVA- oder Montanwachs. Füllstoffe sind beispielsweise Talkum, Silica und Bentonit.

Träger für die erfindungsgemäß aufzubringende Schicht sind Substrate wie Aluminiumfolien, Papier oder Karton verschiedenster Dicke, Kunststoffe oder Verbundmaterialien wie Aluminium/Papier, Kunststoff/Papier und Kunststoff/Aluminium. Besonders bevorzugt als Substrat sind Aluminium, Polyester und Aluminium/Polyamidfilm.

Die zu beschichtenden Substrate können im Falle von Aluminiumfolien beispielsweise eine Dicke von 20 bis 50 µm aufweisen.

Die Beschichtung des Trägers durch Extrusion erfolgt in üblicher Weise. Dazu wird das erfindungsgemäß einzusetzende Polymergemisch, gegebenenfalls mit weiteren Polymeren und Additiven, in einen Extruder gegeben, auf die gewünschte Temperatur erwärmt und auf den Träger extrudiert. Im Extruder kann ein Temperaturgradient eingestellt sein. Der MFI (Melt Flow Index) der Schmelze kann 1 bis 150 g/10 Minuten, vorzugsweise 10 bis 100g/10 Min., jeweils unter 5 kg unter 200 °C, betragen. Das Auftragsgewicht kann beispielsweise 5 bis 30 g/m², vorzugsweise 5 bis 12 g/m², betragen.

Für das Auftragen des das erfindungsgemäße Polymergemisch enthaltenden Lacks auf einen Träger kann ein beliebiges allgemein bekanntes Auftrags- und Dosierverfahren verwendet werden wie der Walzenauftrag, ein Gravur- oder Nipp-Verfahren und die Luftbürsten- oder Rollrakeldosierung.

Das Auftragsgewicht der mittels Lackieren aufgebrachten Schicht kann 2 bis 15 g/m², vorzugsweise 5 bis 10 g/m², betragen. Der Lack enthält ein geeignetes Lösungsmittel und kann einen Feststoffgehalt von 20 bis 50 Gew.%, bezogen auf das Gewicht des Lacks, aufweisen. Die Viskosität des Lacks kann 10 bis 120 Sekunden, vorzugsweise 20 bis 60 Sekunden, gemessen nach DIN mit einem 4mm Becher, betragen.

Anschließend kann eine Prägung, das Bedrucken und das Ausstanzen erfolgen, um beispielsweise einen Deckel zu erhalten. Das Siegeln kann bei einer Temperatur im Bereich von 160 bis 240 °C erfolgen. Dabei wird das erfindungsgemäße Verpackungsmaterial auf ein anderes Verpackungsbehältnis, beispielsweise einen Becher, aufgesiegelt.

Das erfindungsgemäße Verpackungsmaterial kann Siegelnahtfestigkeiten gegenüber PP und PS von 5 bis 16 N/15mm, beispielsweise 7,5 bis 15,0 N/15 mm oder 8,0 bis 14,0 N/15 mm aufweisen. Dadurch ist eine leichte Trennung des erfindungsgemäßen Verpackungsmaterial von einem Verpackungsbehältnis möglich.

Die Erfindung wird durch die folgenden Beispiele weiter erläutert.

### Beispiele

Nachfolgend werden erfindungsgemäß bevorzugte Rezepturen beschrieben und deren Siegelnahtfestigkeiten und Hot-Tack gemessen.

Die Siegelnahtfestigkeit (Siegelwert) wird nach einer internen Prüfanweisung 007 (EST 18/1) der Anmelderin vorgenommen. Die Prüfung erfolgt gegenüber Polypropylen (PP) oder Polystyrol (PS).

Dazu werden siegelbar lackierte Proben über die Bahnbreite des zu prüfenden Materials auf den Zuschnitt gelegt und 1 Sekunde lang unter einem Druck von 3 bar gesiegelt. Nach der Siegelung bei 190 °C werden 15 mm breite Streifen geschnitten und diese in eine Zugfestigkeitsprüfmaschine eingespannt. Nun wird die Kraft gemessen, die nötig ist, die Siegelnaht zu trennen. Im Bereich bis 50 N wird zur Prüfung eine Abzugsgeschwindigkeit von 100 mm/min eingestellt.

Die Hot-Tack-Bestimmung erfolgt nach der Arbeitsvorschrift 17.1 der Anmelderin. Gemessen wird die nach der Prüfung noch verbleibende Siegelnaht in Millimeter.

### Beispiel 1

Ein Gemisch wurde hergestellt aus 6 Gewichtsteilen Styrol/Styrol/1:1/Butadien-Styrol-Blockcopolymer, 65% Styrol, Weichphase 70% und 3 Gewichtsteilen Styrol/Ethylen/Butylen/Styrol-Pfropf-MSA (1,7%) Blockcopolymer (Mw 97.700 g/Mol) 30% Styrol, Weichphase von 70%, einem Gewichtsteil eines Styrol/α-Methylstyrol-Copolymers (Mw 8.600 g/Mol). Zur Herstellung eines Lacks wurde das Gemisch in Essigsäureethylester (70 Gew.%) gelöst, auf eine Aluminiumfolie einer Dicke von 38 µm aufgestrichen und getrocknet. Diese Aluminiumfolie wurde auch in den übrigen Beispielen verwendet. MSA bedeutet Maleinsäureanhydrid. Anschließend wurden Siegelwerte und Hot-Tack nach den oben beschriebenen Verfahren bestimmt. Die Meßergebnisse sind in der Tabelle 1 gezeigt.

### Beispiel 2

Es wurde ein Gemisch hergestellt aus 6 Gewichtsteilen Styrol/Butadien/Styrol-Blockcopolymer (17% Diblock-Anteil), 29% Styrol, Weichphase 71%, 6 Gewichtsteile eines Styrol/Butadien-Copolymers (Tg 57°C), 6 Gewichtsteile eines Styrol/ Ethylen/Butylen/Styrol-Propf-MSA (1,7%)-Blockcopolymer (Mw 97.700 g/Mol), 30% Styrol, Weichphase 70% und 3 Gewichtsteilen eines Styrol/α-Methylstyrol-Copolymers (Mw 8.600 g/Mol). Zur Herstellung eines Lacks wurde das Gemisch in Essigsäureethylester (70 Gew.%) gelöst, auf eine Aluminiumfolie aufgetragen, getrocknet und anschließend mit den oben beschriebenen Verfahren Siegelwerte und Hot-Tack bestimmt. Die Meßergebnisse sind in der Tabelle 1 gezeigt.

### Beispiel 3

Es wurde ein Gemisch hergestellt aus 50 Gewichtsteilen eines Styrol/Ethylen/Butylen/Styrol-Blockcopolymers , 30% Styrol (Mw 87.100 g/Mol), Weichphase 70%, 20 Gewichtsteile Styrol/Ethylen/Butylen/Styrol-Propf-MSA (1,7%)-Blockcopolymer (Mw 97.700 g/Mol), 30% Styrol, Weichphase 70%, 30 Gewichtsteilen eines Styrol/Styrol/1:1/Butadien-Styrol-Blockcopolymers, 65% Styrol, Weichphase 70% und 5 Gewichtsteilen eines Styrol/Butadien/Copolymers mit einer Tg von 57°C. Zur Herstellung eines Lacks wurde das Gemisch in Isopropylacetat/Ethylacetat (70 Gew.%) gelöst, auf eine Aluminiumfolie aufgetragen, getrocknet und die Siegelwerte und Hot-Tack gemäß den oben beschriebenen Verfahren bestimmt. Die Meßergebnisse sind in der Tabelle 1 gezeigt.

### Beispiel 4

Ein Gemisch wurde hergestellt aus 10 g eines Styrol/ Ethylen/Butylen/Styrol-Blockcopolymers, 30% Styrol (Mw = 87.100 g/Mol), Weichphase 70%, 2 g eines Polypropylen-Propf-MSA (4,2% MSA), Mw 32.000 g/Mol) und 6 g eines Styrol/Butadien-Copolymers mit einer Tg von 61°C. Zur Herstellung eines Lacks wurde das Gemisch in einem Lösemittel aus Cyclohexan/Butylacetat (70 Gew.%) gelöst, auf eine Aluminiumfolie aufgetragen und getrocknet. Die Siegelwerte und Hot-Tack wurden in der oben beschriebenen Weise bestimmt. Die Prüfergebnisse sind in der Tabelle 1 wiedergegeben.

### Beispiel 5

Ein Gemisch aus 8 Gewichtsteilen Styrol/Styrol/1:1/ Butadien/Styrol-Blockcopolymer, 65% Styrol, Weichphase 70%, 2 Gewichtsteilen Styrol/α-Methylstyrol-Copolymer (Mw 8.600 g/Mol) und 1 Gewichtsteil eines Styrol/MSA-Copolymers (6% MSA) wurde in 2-Butanon (70 Gew.%) gelöst, auf eine Aluminiumfolie aufgetragen und getrocknet. Die Siegelwerte und der Hot-Tack wurden in der oben beschriebenen Weise bestimmt. Die Ergebnisse sind in der Tabelle 1 gezeigt.

### Beispiel 6

Ein Gemisch wurde hergestellt aus 20 Gewichtsteilen eines Styrol/Butadien-Styrol-Blockcopolymers (17% Diblock-Anteil), 29% Styrol, Weichphase 71%, 23 Gewichtsteile eines Styrol/α-Methylstyrol-Copolymers (Mw 8.600 g/Mol), 16 Gewichtsteile eines Styrol/Butadien-Copolymers einer Tg von 57°C und 18 Gewichtsteilen eines Styrol/Ethylen/ Butylen/Styrol-Propf-MSA (1,7%) Blockcopolymer (Mw 97.700 g/Mol), 30% Styrol, Weichphase 70%. Zur Herstellung eines Lacks wurde das Gemisch in Essigsäureethylester (70 Gew.%) gelöst, auf eine Aluminiumfolie aufgetragen, getrocknet und Siegelwerte und Hot-Tack in der oben beschriebenen Weise bestimmt. Die Ergebnisse sind in Tabelle 1 gezeigt.

### Beispiel 7

Ein Gemisch wurde hergestellt aus 17 Gewichtsteilen Styrol/Styrol/1:1/Butadien-Styrol-Blockcopolymer, 65% Styrol, Weichphase 70%, 3 Gewichtsteilen eines Styrol/α-Methylstyrol-Copolymers (Mw 11.500 g/Mol) und 4 Gewichtsteilen eines Styrol/MSA-Copolymers (6% MSA). Zur Herstellung eines Lacks wurde das Gemisch in 2-Butanon (70 Gew.%) zur gelöst, auf eine Aluminiumfolie aufgetragen, getrocknet und die Siegelnahtwerte und der Hot-Tack in der oben bezeichneten Weise bestimmt. Die Ergebnisse sind in der Tabelle 1 gezeigt.

### Beispiel 8

Ein Gemisch wurde hergestellt aus 12 Gewichtsteilen eines Styrol/Styrol/1:1/Butadien-Styrol-Blockcopolymers, 65% Styrol, Weichphase 70%, 12 Gewichtsteilen eines Styrol/α-Methylstyrol-Copolymers (Mw 8.600 g/Mol), 10 Gewichtsteilen eines Styrol/Butadien-Copolymers einer Tg von 57°C und 12 Gewichtsteilen eines Styrol/Ethylen/Butylen/Styrol -Propf-MSA-(1,7%)-Blockcopolymers, (Mw 97.700 g/Mol), 30% Styrol, Weichphase 70%. Zur Herstellung eines Lacks wurde das Gemisch in Isopropylacetat/Ethylacetat (70 Gew.%) gelöst. Der Lack wurde auf eine Aluminiumfolie aufgetragen, getrocknet und in der oben beschriebenen Weise Siegelwerte und Hot-Tack bestimmt. Die Ergebnisse sind in der folgenden Tabelle 1 gezeigt.

**Tab. 1**

| | SIEGELWERT (Mittelwert in N über 15 mm) | | HOT TACK (verbleibende Siegelnaht in mm) | | |
|---|---|---|---|---|---|
| | **PP** | **PS** | **180 °C** | **220 °C** | **260 °C** |
| | | | | | |
| Beispiel 1 | 12,2 / 13,0 | 9,9 / 14,7 | 18,0 | 17,3 | 16,7 |
| Beispiel 2 | 9,4 / 12,5 | 8,6 / 9,7 | 17,5 | 18,5 | 17,0 |
| Beispiel 3 | 7,9 / 11,5 | 9,7/10,8 | 14,0 | 14,6 | 11,8 |
| Beispiel 4 | 8,7 / 10,2 | 8,5 / 8,0 | 14,5 | 15,4 | 13,2 |
| Beispiel 5 | 8,0 / 8,5 | 8,0 / 9,4 | 12,2 | 11,5 | 11,0 |
| Beispiel 6 | 10,0 / 12,2 | 9,6 / 9,9 | 17,2 | 18,5 | 16,0 |
| Beispiel 7 | 9,0 / 9,8 | 8,0 / 8,4 | 13,5 | 11,1 | 10,1 |
| Beispiel 8 | 10,0 / 14,4 | 8,0 / 8,7 | 17,5 | 18,5 | 14,6 |

## Patentansprüche

1. Verpackungsmaterial mit einem Substrat und einer auf dem Substrat ausgebildeten thermoplastischen Polymerschicht, **dadurch gekennzeichnet, dass** die thermoplastische Polymerschicht
(A) ein Block- oder Pfropfcopolymer, das Hartsegmente einer Glasübergangstemperatur (Tg) von 30 bis 200 °C und Weichsegmente einer Tg von -80 bis 20 °C aufweist und
(B) ein polare Gruppen enthaltendes Polymer
enthält und der Volumenanteil der Hart- und Weichsegmente der Polymere der thermoplastischen Polymerschicht 3:1 bis 1:3 beträgt.

2. Verpackungsmaterial nach Anspruch 1, **dadurch gekennzeichnet, dass** der Volumenanteil der Hart- und Weichsegmente der Polymere der thermoplastischen Polymerschicht etwa 2:1 bis 1:2 beträgt.

3. Verpackungsmaterial nach Anspruch 1, **dadurch gekennzeichnet, dass** die Tg der Hartsegmente der Polymere der thermoplastischen Polymerschicht 40 bis 120 °C beträgt.

4. Verpackungsmaterial nach Anspruch 1, **dadurch gekennzeichnet, dass** die Tg der Weichsegmente der Polymere der thermoplastischen Polymerschicht -65 bis 5 °C beträgt.

5. Verpackungsmaterial nach Anspruch 1, **dadurch gekennzeichnet, dass** das polare Gruppen enthaltende Polymer in einem Anteil von 50 bis 5 Gew.%, bezogen auf die Polymermasse der thermoplastischen Schicht, enthalten ist.

6. Verpackungsmaterial nach einem der Ansprüche 1 bis 5, **dadurch gekennzeichnet, dass** die thermoplastische Polymerschicht ein Polymer (C) enthält, welches mit der Hartphase oder der Weichphase der Komponente (A) verträglich ist.

7. Verpackungsmaterial nach einem der Ansprüche 1 bis 6, **dadurch gekennzeichnet, dass** das Polymergemisch der Polymerschicht durch Extrusion auf den Träger aufgebracht wird.

8. Verpackungsmaterial nach einem der Ansprüche 1 bis 6, **dadurch gekennzeichnet, dass** das Polymergemisch der Polymerschicht in Form eines Lacks, enthaltend ein Lösungsmittel, auf den Träger aufgebracht wird.

9. Verwendung eines Polymergemischs nach einem der Ansprüche 1 bis 8, enthaltend ein polare Gruppen aufweisendes Polymer und ein Block- oder Pfropfcopolymer, wobei das Copolymer Hartsegmente einer Glasübergangstemperatur (Tg) von 30 bis 200 °C und Weichsegmente einer Tg von -80 bis 20 °C enthält und der Volumenanteil der Hart- und Weichsegmente der Polymer der thermoplastischen Polymerschicht 3:1 bis 1:3 beträgt, zur Herstellung eines Verpackungsmaterials mittels Lackauftragtechnologie oder Extrusionstechnologie.

## Claims

1. Packaging material with a substrate and a thermoplastic polymer layer formed on the substrate, **characterized in that** the thermoplastic polymer layer comprises
(A) a block or graft copolymer exhibiting hard segments with a glass transition temperature (Tg) of 30 to 200 °C and soft segments with a Tg of - 80 to 20 °C, and
(B) a polymer comprising polar groups,
and the volume fraction of the hard and soft segments of the polymers of the thermoplastic polymer layer is 3:1 to 1:3.

2. Packaging material according to claim 1, **characterized in that** the volume fraction of the hard and soft segments of the polymers of the thermoplastic polymer layer is approximately 2:1 to 1:2.

3. Packaging material according to claim 1, **characterized in that** the Tg of the hard segments of the polymers of the thermoplastic layer is 40 to 120 °C.

4. Packaging material according to claim 1, **characterized in that** the Tg of the soft segments of the polymers of the thermoplastic layer is -65 to 5 °C.

5. Packaging material according to claim 1, **characterized in that** the polymer comprising polar groups is comprised in an amount of 50 to 5 percent by weight, based on the polymer mass of the thermoplastic layer.

6. Packaging material according to any of claims 1 to 5, **characterized in that** the thermoplastic polymer layer comprises a polymer (C) that is compatible with the hard phase or the soft phase of component (A).

7. Packaging material according to any of claims 1 to 6, **characterized in that** the polymer blend of the polymer layer is applied to the carrier by extrusion.

8. Packaging material according to any of claims 1 to 6, **characterized in that** the polymer blend of the polymer layer is applied to the carrier in form of a lacquer that comprises a solvent.

9. Use of a polymer blend according to any of claims 1 to 8 comprising a polymer comprising polar groups and a block or grafta copolymer, wherein the copolymer comprises hard segments with a glass transition temperature (Tg) of 30 to 200 °C and soft segments with a Tg of -80 to 20 °C, and the volume fraction of the hard and soft segments of the polymers of the thermoplastic layer is 3:1 to 1:3, for the making of a packaging material by means of lacquer coating technology or extrusion technology.

## Revendications

1. Matériau d'emballage qui présente un support et une couche de polymère thermoplastique formée sur le support, **caractérisé en ce que** la couche de polymère thermoplastique :
(A) est un copolymère séquencé ou greffé qui présente des segments durs dont la température de transition vitreuse (Tg) est comprise entre 30 et 200°C et des segments mous dont la Tg est comprise entre -80 et 20°C et
(B) un polymère qui contient un groupe polaire
et **en ce que** le rapport volume entre les segments durs et les segments mous des polymères de la couche polymère thermoplastique est compris entre 3 : 1 et 1 : 3.

2. Matériau d'emballage selon la revendication 1, **caractérisé en ce que** le rapport volumique entre les segments durs et les segments mous des polymères de la couche de polymère thermoplastique est compris entre environ 2 : 1 et 1 : 2.

3. Matériau d'emballage selon la revendication 1, **caractérisé en ce que** la Tg des segments durs des polymères de la couche polymère thermoplastique est de 40 à 120°C.

4. Matériau d'emballage selon la revendication 1, **caractérisé en ce que** la Tg des segments durs des polymères de la couche polymère thermoplastique est de -65 à 5°C.

5. Matériau d'emballage selon la revendication 1, **caractérisé en ce qu'**il contient le polymère qui contient des groupes polaires dans une proportion de 50 à 5 % par rapport à la masse polymère de la couche thermoplastique.

6. Matériau d'emballage selon l'une des revendications 1 à 5, **caractérisé en ce que** la couche de polymère thermoplastique contient un polymère (C) compatible avec la phase dure ou avec la phase molle du composant (A).

7. Matériau d'emballage selon l'une des revendications 1 à 6, **caractérisé en ce que** le mélange de polymères de la couche polymère est appliqué par extrusion sur le support.

8. Matériau d'emballage selon l'une des revendications 1 à 6, **caractérisé en ce que** le mélange de polymères de la couche polymère est appliqué sur le support sous la forme d'une peinture qui contient un solvant.

9. Utilisation d'un mélange de polymères selon l'une des revendications 1 à 8, qui contient un polymère qui présente des groupes polaires et un copolymère séquencé ou greffé, le copolymère contenant des segments durs dont la température de transition vitreuse (Tg) est comprise entre 30 et 200°C et des segments mous dont la Tg est comprise entre -80 et 20°C, le rapport volumique entre les segments durs et les segments mous du polymère de la couche polymère thermoplastique étant compris de 3 : 1 à 1 : 3, pour la fabrication d'un matériau d'emballage par la technologie d'application d'une peinture ou la technologie d'extrusion.
